# EUROPEAN PATENT APPLICATION

(11) **EP 4 810 272 A1**
(43) Date of publication of application: **23.09.2026**
(21) Application number: 26156960.2
(22) Date of filing: 06.02.2026
(51) Int. Cl.: B60G 3/01, B60G 13/00, A01M 7/00

(54) **VEHICLE SUSPENSION DAMPING SYSTEMS**

(30) Priority: 20.03.2025 US 202563775026 P; 13.01.2026 US 202619447226
(71) Applicant: Deere & Company, Moline, IL 61265 (US); Iowa State University Research Foundation, Inc., Ames, IA 50011 (US)
(72) Inventor: COOK, Jeffrey M, Waterloo (US); HUERTA-MUSIL, Joel, Ames (US); ANDERSON, Jack C, Madrid (US); ALDERS, Dirk, Overloon (US); ADAMS, Bailey J, Ames (US)
(74) Representative: Reddie & Grose LLP

(57) **Abstract**

Systems, apparatus, articles of manufacture, and methods of vehicle suspension damping are disclosed. An example vehicle includes a chassis, a first damper coupled to the chassis, a second damper coupled to the chassis, and a wheel. The first damper and the second damper are coupled to the wheel, and the first damper is configured to provide suspension compression when the second damper provides suspension extension.

## Description

### RELATED APPLICATION

This patent claims the benefit of U.S. Provisional Patent Application No. 63/775,026, which was filed on March 20, 2025. U.S. Provisional Patent Application No. 63/775,026 is hereby incorporated herein by reference in its entirety. Priority to U.S. Provisional Patent Application No. 63/775,026 is hereby claimed.

### FIELD OF THE DISCLOSURE

This disclosure relates generally to vehicle suspension and, more particularly, to vehicle suspension damping systems.

### BACKGROUND

Suspension systems for vehicles such as agricultural equipment are passive in nature and are designed to level out the chassis around a nominal height based on a vehicle weight.

### SUMMARY

Systems, apparatus, articles of manufacture, and methods are disclosed for vehicle suspension damping systems. An example vehicle includes a chassis; a first damper coupled to the chassis; a second damper coupled to the chassis; and a wheel, the first damper and the second damper coupled to the wheel, and the first damper is configured to provide suspension compression when the second damper provides suspension extension.

In one example, the suspension compression and the suspension extension are symmetric.

In another example, the first damper and the second damper include hydraulic dampers.

In another example, the vehicle includes an axle knee, a first end of the first damper coupled to the axle knee; a wheel motor casting coupled to a rim of the wheel, a second end the first damper coupled to the wheel motor casting, a first end of the second damper coupled to the wheel motor casting; and a support plate, a second end of the second damper coupled to the support plate.

In another example, the wheel motor casting has a first end and a second end separated by a length, the length parallel to a diameter of the wheel, the first damper coupled to the first end of the wheel motor casting and the second damper coupled to the second end of the wheel motor casting.

In another example, the wheel includes a tire, and a width of the tire, wheel motor casting, first damper, and second damper is less than about thirty inches.

In another example, the vehicle includes a displacement sensor to identify a distance between the axle knee and the wheel motor casting.

In another example, the wheel is a first wheel, and the vehicle includes a third damper coupled to chassis; a fourth damper coupled to the chassis; and a second wheel, the third damper and the fourth damper coupled to the second wheel, and the third damper is configured to provide suspension compression when the fourth damper provides suspension extension.

In another example, the first damper and the second damper are operable independently from the third damper and the fourth damper.

An example, suspension control system for a vehicle includes a first damping system operatively coupled to a first location of a chassis of the vehicle between a sprung mass and an unsprung mass, the first damping system having a first damping force in suspension compression and a second damping force in suspension extension, the first damping force and the second damping force are equal in magnitude; and a second damping system operatively coupled to a second location of the chassis of the vehicle between the sprung mass and then unsprung mass, the second damping system having a third damping force in suspension compression and a fourth damping force in suspension extension, the third damping force and the fourth damping force are equal in magnitude.

In one example, the first damping system includes: a first damper; and a second damper, the first damper configured to provide suspension compression when the second damper provides suspension extension.

In another example, the second damping system includes a third damper; and a fourth damper, the third damper configured to provide suspension compression when the fourth damper provides suspension extension.

In another example, the first damping system and the second damping system are to operate independently.

In another example, the first damping system and the second damping system include a plurality of hydraulic dampers.

An example method to stabilize a vehicle chassis includes activating a first damper coupled between a wheel and a location of a vehicle chassis; and activating a second damper coupled between the wheel and the location of the vehicle chassis, the first damper configured to provide suspension compression when the second damper provides suspension extension.

In one example, the suspension compression and the suspension extension are symmetric.

In another example, the method includes: sensing a displacement of the wheel relative to the chassis; and activating one of the first damper or the second damper based on the displacement.

In another example, the wheel is a first wheel, and the location is a first location, and the method further includes: activating a third damper coupled between a second wheel and a second location of the vehicle chassis; and activating a fourth damper coupled between the second wheel and the second location of the vehicle chassis, the third damper configured to provide suspension compression when the fourth damper provides suspension extension.

In another example, the method includes: activating the first damper and the second damper in unison; and activating the third damper and the fourth damper in unison.

In another example, the activating of the third damper and the fourth damper is independent of the activating of the first damper and the second damper.

### BRIEF DESCRIPTION OF THE DRAWINGS

FIG. 1 illustrates an example agricultural sprayer including a tractor and a sprayer implement.
FIG. 2 illustrates an example tractor of the agricultural sprayer of FIG. 1 including an example vehicle suspension damping system and without the sprayer implement shown.
FIG. 3A is a perspective view of a wheel and the vehicle suspension damping system of FIG. 2 in a nominal suspension state.
FIG. 3B is a front view of the wheel and vehicle suspension damping system of FIG. 3A.
FIG. 3C is a side view of the wheel and vehicle suspension damping system of FIG. 3A.
FIG. 4A is a perspective view of a wheel and the vehicle suspension damping system of FIG. 2 in a compressed state.
FIG. 4B is a front view of the wheel and vehicle suspension damping system of FIG. 4A.
FIG. 4C is a side view of the wheel and vehicle suspension damping system of FIG. 4A.
FIG. 5A is a perspective view of a wheel and the vehicle suspension damping system of FIG. 2 in an extended state.
FIG. 5B is a front view of the wheel and vehicle suspension damping system of FIG. 5A.
FIG. 5C is a side view of the wheel and vehicle suspension damping system of FIG. 5A.
FIG. 6A illustrates a second example configuration of the vehicle suspension damping system of FIG. 2 a nominal suspension state.
FIG. 6B illustrates the vehicle suspension damping system of FIG. 6A in a compressed state.
FIG. 6C illustrates the vehicle suspension damping system of FIG. 6A in an extended state.
FIG. 7 illustrates a third example configuration of the vehicle suspension damping system of FIG. 2.
FIG. 8A is a plot of damping force versus velocity for a single damper.
FIG. 8B is a plot of damping force versus velocity for two dampers mechanically mounted in accordance with the teachings of this disclosure.
FIG. 9 is a block diagram of an example processing platform including programmable circuitry structured to execute, instantiate, and/or perform machine-readable instructions to control dampers and vehicle suspension damping systems disclosed herein.

In general, the same reference numbers will be used throughout the drawing(s) and accompanying written description to refer to the same or like parts. The figures are not necessarily to scale.

### DETAILED DESCRIPTION

Heavy equipment or work vehicles such as off-road vehicles, agricultural vehicles, construction vehicles, and road maintenance vehicles include suspension control to cushion or damp movement of the chassis of the vehicle. Example work vehicles include tractors, combine harvesters, forage harvesters, sugarcane harvesters, seed drills, field sprayers, loaders, telescopic handlers, backhoes, excavators, graders, feller bunchers, forwarders, log loaders, skidders, dump trucks, cranes, etc. Chassis movement can be caused by traversal of the vehicle across terrain (e.g., a field) and by operation of the work vehicle or an attachment or implement connected to the work vehicle. Example work vehicle implements include seeders, spreaders, round balers, sprayers, tillage, headers for combine harvesters, windrower headers, buckets, sweepers, rollers, blades, jackhammers, booms, etc.

A chassis of a work vehicle, such as an agricultural sprayer, experiences changes of mass at locations such as corners of the chassis, referred to herein as corner mass, during deployment, or unfolding, of a sprayer boom and with movement of a volume of liquid in a tank. The change in mass causes the chassis to rock or otherwise move. Excessive chassis movement can jostle or otherwise cause discomfort to an operator in a cab of the vehicle and may compromise performance of the work vehicle for its intended purpose. Operator discomfort and compromised vehicle performance can limit the duration for which the work vehicle operated. Compromised vehicle performance can cause damage to the vehicle or the implement and/or negatively affect the performance of the implement such as spray quality.

Some vehicle chassis suspension controls mechanically adjust hydraulic cylinder pressures or air spring pressure to re-level the chassis and compensate for movement caused by changes to corner mass. However, known systems typically include a mechanical spring having a single acting spring rate or force curve. Examples disclosed herein improve known systems and can compensate for rapidly adjusting forces during in-field dynamic conditions to actively control unwanted chassis suspension dynamics and overall vehicle instability.

Examples disclosed herein actively and independently control suspension systems at different locations of a chassis of a work vehicle. For example, variable hydraulic damper components are actively controlled to apply a variable force on respective independent corner chassis suspension systems of a work vehicle such as an agricultural sprayer with boom platforms. Examples disclosed herein incorporate mechanical and/or hydraulic active damping components, sensors, programmable controllers, and logic to intelligently change the damping force of the dampers as a function of dynamic, in-field conditions and operating states of the work vehicle and/or implements connected to the work vehicle.

Examples disclosed herein enable a continuous and rapid change of damping force imparted on the chassis suspension system. The damping force can be optimized based on normal in-field conditions, fluctuating in-field conditions, and/or operating conditions that pose instability challenges for the work vehicle and implements connected to the work vehicle.

Examples disclosed herein control suspension to reduce work vehicle in-cab accelerations and provide improved operator comfort and health. Improved operator comfort reduces operator fatigue, which enables increased daily operating hours. In the context of an agricultural sprayer, increased operating hours are particularly beneficial during peak, busy seasons when products are applied to fields.

Examples disclosed herein control suspension to increase work vehicle stability. Smoother chassis suspension dynamics improve overall vehicle ride characteristics and help stabilize vehicles. In the context of an agricultural sprayer, substantial sloshing of liquid can occur in the solution tank, which shakes the work vehicle. The example suspension controls systems disclosed herein mitigate the shaking.

Examples disclosed herein control suspension to aid control over implements. For example, considering an agricultural sprayer, improvements in control of the vehicle suspension decrease the likelihood that unwanted disturbances or other chassis movements are propagated to and affect the boom platform on the back end of the work vehicle. Thus, examples disclosed herein enhance control over boom height and increase boom height stability. A stable boom improves the effectiveness of an agricultural sprayer including, for example, at higher application speeds.

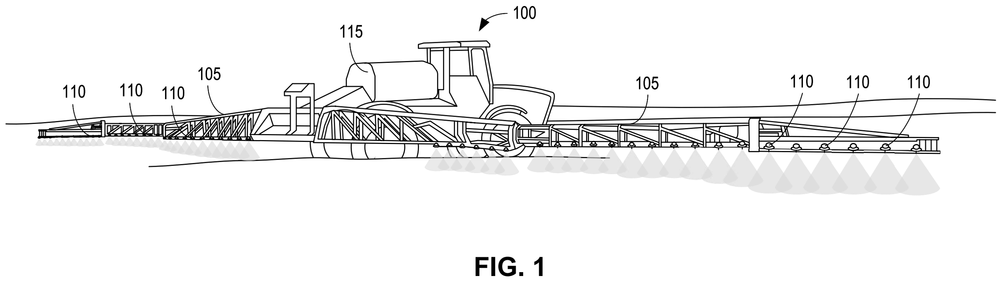

FIG. 1 illustrates an example vehicle 100 and example implement 105. In this example, the vehicle 100 is an agricultural sprayer. In this example, the implement 105 is a sprayer boom. Though an agricultural sprayer is illustrated in FIG. 1 and discussed throughout this disclosure, the suspension controls disclosed herein are applicable to all work vehicle types. Examples disclosed also may be implemented in automotive vehicles, off-road vehicles such as side-by-side vehicles, and other recreational vehicles.

Agricultural sprayers are used to apply a spray of a liquid (e.g., fertilizer, fungicides, and/or other products) to a field using nozzles 110 mounted on the boom 105. The booms 105 on many agricultural sprayers 100 have dynamics of a flexible beam and are susceptible to vibration or other undesired movements.

To spray the liquid, the agricultural sprayer 100 includes a pump that pumps the liquid from a reservoir or tank 115 to the nozzles 110 mounted on the boom 105. The spray is controlled to deliver a target application to the agricultural field. For example, the liquid can be delivered to a particular dispersal area, such as directly on a crop or weed, in between plants, etc. The liquid can be delivered at a specified rate so that a target quantity of the liquid is applied to the dispersal area. Deviations from a prescribed application of the liquid can result in the liquid being applied to unintended areas and/or in incorrect amounts. For example, unevenly applied fertilizer is wasted in areas of over-application, and ineffective in areas of under-application.

In the illustrated example, the longitudinal axis of the boom 105 is perpendicular to the direction of travel of the agricultural sprayer 100 across the field. As the agricultural sprayer 100 traverses across the field, disturbances such as changes in wheel height due to ground level changes, impact with objects such as rocks, tree roots, etc., and/or wind can cause the boom 105 to vibrate. Boom vibration affects the boom position and orientation, and adversely affects the spraying performance. Changes in boom position and orientation changes the vertical position of the nozzles 110, and the distance of the nozzles 110 to the dispersal area in the field. In addition, when turning the agricultural sprayer 100, centrifugal force can cause movement of the boom 105, and thus the nozzles 110 mounted on the boom 105. Changes in the chassis height and turning of the agricultural sprayer 100 can also cause sloshing of a volume of liquid in the tank 115. Sloshing liquid can also affect the boom position and orientation.

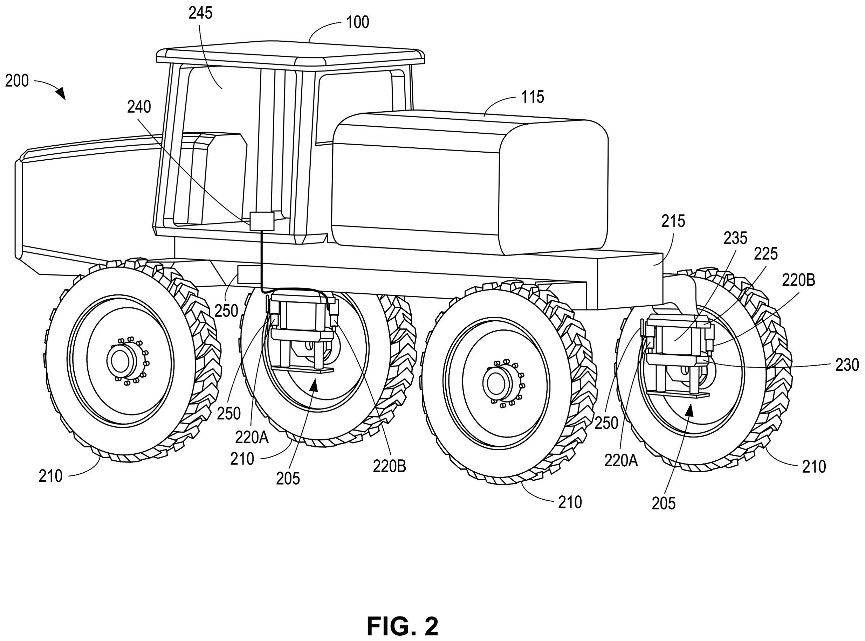

Suspension controls are used to mitigate vibration in the boom 105 and sloshing of liquid in the tank 115. FIG. 2 illustrates an example tractor or work vehicle 200 for the agricultural sprayer 100 of FIG. 1 with an example active suspension control system 205. In some examples, the active suspension control system 205 is also referred to as a damping system. The boom 105 is not shown in FIG. 2 for clarity. The work vehicle 200 has four wheels 210. In the illustrated example, there are elements of the active suspension control system 205 at each of the wheels 210, as described below. Thus, there are elements of the active suspension control system 205 at different locations (e.g., corners) of a chassis 215 of the work vehicle 200. Active suspension control systems are suspension and damping systems that cushion or damp movement between a first part (e.g., the chassis 215) and a second part (e.g., one or more of the wheels 210) of the work vehicle 200. The work vehicle 200 of the example of FIG. 2 has four wheels. The suspension controls disclosed herein may be used with vehicles with other drive forms including, for example, three wheeled vehicles, tracked systems, etc.

The active suspension control system 205 includes an example first active damper 220A and an example second active damper 220B. In some examples, the first active damper 220A and the second active damper 220B include a hydraulic damper. The first active damper 220A and the second active damper 220B are coupled between the chassis 215 (i.e., a sprung mass) and the wheel 210 (i.e., an unsprung mass). For example, the first active damper 220A and the second active damper 220B are coupled between an axle knee 225 (i.e., a sprung mass) and a wheel motor casting 230 (i.e., an unsprung mass). The axle knee 225 can be a casting or a weldment. In some examples, the active suspension control system 205 includes one of the first active damper 220A or the second active damper 220B. In some examples, the work vehicle 200 includes an example air spring 235. In the illustrated example, the air spring 235 is positioned between the first active damper 220A and the second active damper 220B. The air spring 235 is incorporated in a mechanical leveling valve system that assists in suspension control and stabilization of the chassis 215.

The work vehicle 200 includes an example electronic controller 240. In the illustrated example, the electronic controller 240 is positioned in a cab 245 of the work vehicle 200 for access by an operator. The electronic controller 240 can include input interfaces (e.g., keys, dials, buttons, switches, a touch screen, a microphone, etc.) for an operator to provide information and/or commands. The electronic controller 240 also includes an output interface (e.g., a display, speakers, etc.) to provide information to the operator. The electronic controller 240 is coupled to the first active damper 220 and the second active damper 220B. In some examples, the electronic controller 240 is part of the active suspension control system 205. The electronic controller 240 includes processor circuitry that controls the active suspension control system 205 including, for example, preparing and sending control signals to the first active damper 220A and the second active damper 220B.

The work vehicle 200 includes a plurality of sensors 250 that are coupled to the electronic controller 240. Some of the sensors 250 may be displacement sensors to detect suspension displacement. Some of the sensors 250 may detect a position and/or motion of the work vehicle 200 and/or the chassis 215 including velocity, linear acceleration, angular acceleration, levelness of the chassis, rotation, etc. The work vehicle 200 can include additional sensors 250 to detect a liquid level in the tank 115, a movement of a volume of liquid in the tank 115, a position of the boom 105 (folded, unfolded, partially unfolded, height, angle, etc.), torque on an axle, signals from a transmission control module, signals from a powertrain control module, signals from hydrostatic drive controls, depression of a brake pedal, depression of an accelerator pedal, wind speed, wind direction, steering angle, etc.

The active suspension control system 205 activates the first active damper 220A and the second active damper 220B to mitigate movement of the chassis 215 based on data gathered by and/or generated by one or more of the sensors 250. In some examples, the first active damper 220A and the second active damper 220B are activated in unison. In some examples, the first active damper 220A, the second active damper 220B, and the air spring 235 are activated in unison.

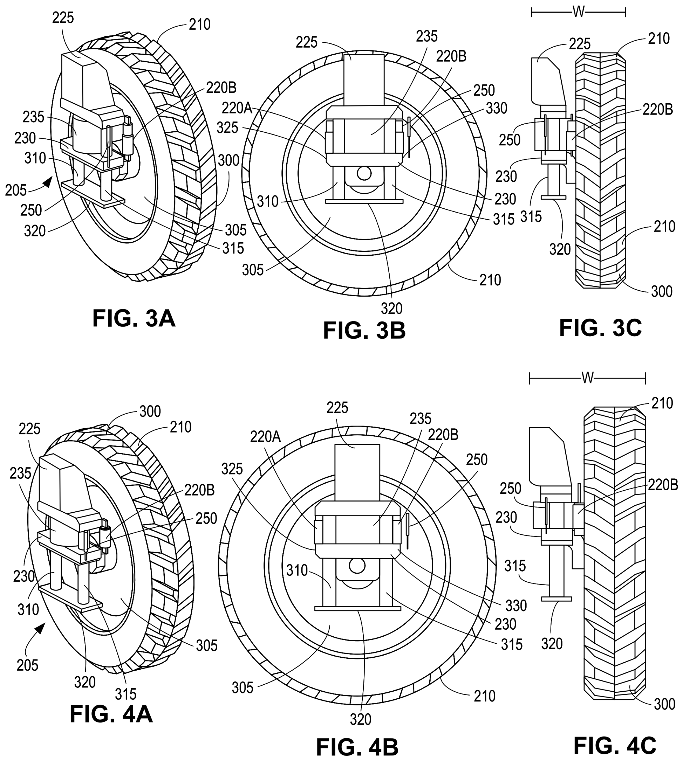

FIG. 3A is a perspective view of one of the wheels 210 and the vehicle suspension damping system, that is, the active suspension control system 205 of FIG. 2. In FIG. 3A, the active suspension control system 205 is in a nominal suspension state. FIG. 3B is a front view of the wheel 210 and the active suspension control system 205 of FIG. 3A. FIG. 3C is a side view of the wheel 210 and the active suspension control system 205 of FIG. 3A. The wheel 210 includes a tire 300 and a rim 305. The active suspension control system 205 is coupled to the rim 305. The wheel 210, the tire 300, and the rim 305 form part of the unsprung mass with the wheel motor casting 230.

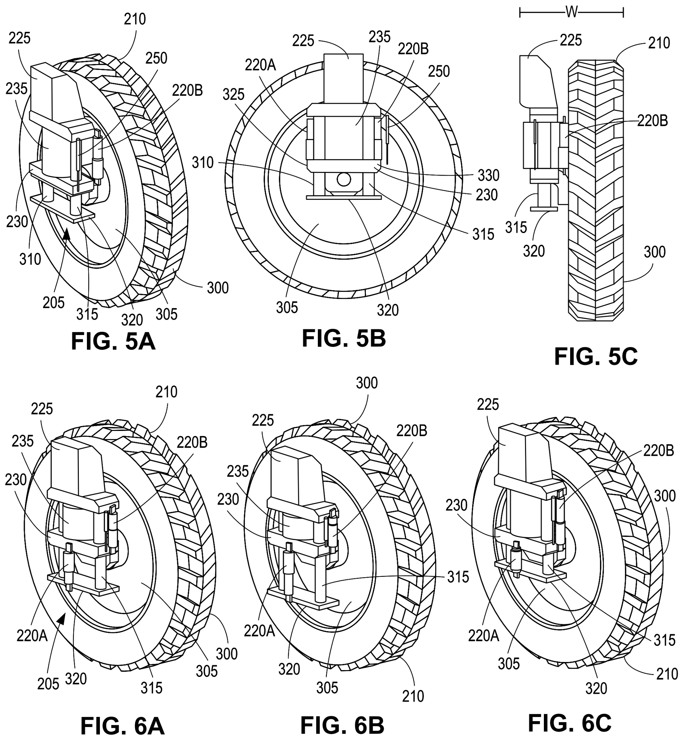

The active suspension control system 205 includes a first suspension strut 310 and a second suspension strut 315. The first suspension strut 310 and the second suspension strut 315 extend from the axle knee 225 through the wheel motor casting 230 to a support plate 320. The support plate 320 acts as a travel stop. In some examples, there are separate support plates or travel stops for the respective first suspension strut 310 and the second suspension strut 315. The wheel motor casting 230, and effectively the wheel 210, slide along the first suspension strut 310 and the second suspension strut 315 as the active suspension control system 205 transitions between the compressed state shown in FIGS. 4A, 4B, and 4C and the extended state shown in FIGS. 5A, 5B, and 5C. In other words, the unsprung mass slides along the first suspension strut 310 and the second suspension strut 315 as the first active damper 220A and/or the second active damper 220B provide compression damping force or extension damping force to stabilize the chassis 215.

The sensor 250 is a displacement sensor that measures displacement of the wheel motor casting 230 relative to the axle knee 225. Displacement data is communicated to the electronic controller 240 and is used to determine when to activate one or both of the first active damper 220A and the second active damper 220B. When activated, the first active damper 220A and the second active damper 220B supply force to change a distance between the wheel motor casting 230 and the axle knee 225 to stabilize the chassis 215. The first active damper 220A and the second active damper 220B supply force to move the active suspension control system 205 between the compressed state shown in FIGS. 4A, 4B, and 4C and the extended state shown in FIGS. 5A, 5B, and 5C.

In the example of FIGS. 3A-5C, the wheel motor casting 230 has a first end 325 and a second end 330 separated by a length. The length is parallel to a diameter of the wheel 210. The first active damper 220A is coupled to the first end 325 of the wheel motor casting 230. The second active damper 220B is coupled to the second end 330 of the wheel motor casting 230. The first active damper 220A and the second active damper 220B are positioned so that the first active damper 220A and the second active damper 220B do not extend further from the tire 300 than the wheel motor casting 230 or the axle knee 225. Together, the tire 300, the wheel motor casting 230, the axle knee 225, the first active damper 220A, and the second active damper 220B have a width, w. In some examples, the width is less than about thirty inches. This width enables the work vehicle 200 with the active suspension control system 205 to drive through fields of crops in the row spacing between the crops. For example, corn producers typically space the rows of corn thirty inches apart.

FIG. 6A illustrates a second example configuration of the active suspension control system 205 in which the first active damper 220A is positioned between the wheel motor casting 230 and the support plate 320. A first end of the first active damper 220A is coupled to the wheel motor casting 230, and a second end of the first active damper 220B is coupled to the support plate 320. FIG. 6A shows the active suspension control system 205 in a nominal suspension state. FIG. 6B illustrates the active suspension control system 205 in a compressed state where the wheel motor casting 230 is positioned relatively closer to the axle knee 225 than in the nominal state. FIG. 6C illustrates the active suspension control system 205 wherein the wheel motor casting 230 is positioned relatively further from the axle knee 225 than in the nominal state. In some examples, the first active damper 220A is connected between the wheel motor casting 230 and the support plate 320 at one of the first end 325 or the second end 330 of the wheel motor casting 230 and inline of the width of the wheel motor casting 230 so that the first active damper 220A does not add extra dimensions to the width, w, of the tire 300, the wheel motor casting 230, and the axle knee 225.

In some examples, each of the first active damper 220A and the second active damper 220B produce more suspension extension force than suspension compression force. Examples disclosed herein leverage these non-symmetric force characteristics by mounting the first active damper 220A and the second active damper 220B in the unique mechanical orientations shown in FIGS. 3A-6B, which achieves equal damping forces in each direction.

In examples disclosed herein, one of the first active damper 220A or the second active damper 220B provides suspension compression damping force while the other of the first active damper 220A or the second active damper 220B provides suspension extension damping force. In some examples, the suspension compression damping force and the suspension extension damping force are symmetric. Thus, the mounting of the first active damper 220A and the second active damper 220B with unequal compression/extension characteristics results in a first damping force in suspension compression and a second damping force in suspension extension. The first damping force has a first magnitude, and the second damping force has a second magnitude. In some examples, the first magnitude and the second magnitude are equal. Thus, there are equal compression and extension suspension damping forces. In other examples, the suspension compression and the suspension extension are asymmetric where the first magnitude and the second magnitude are different.

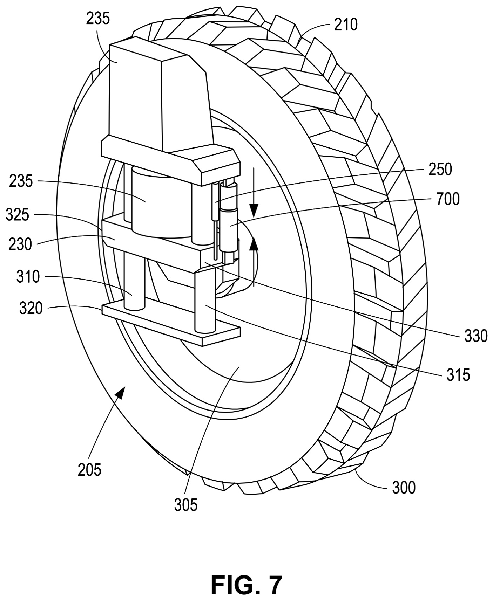

In some examples, the active suspension control system 205 achieves equal or symmetric compression and extension suspension damping forces via two components, namely, the first active damper 220A and the second active damper 220B with opposing motion (one extends while the other contracts). In other examples, the active suspension control system 205 achieves equal or symmetric compression and extension suspension damping forces via a single element that with equal compression and extension force characteristics. FIG. 7 illustrates a third example configuration of the active suspension control system 205 of FIG. 2 that includes a single damper 700 that has symmetric compression and extension force characteristics. In some examples, the damper 700 is an active damper. In some examples, the damper 700 is a hydraulic damper. The damper 700 provides a compression force and an extension force that are equal in magnitude.

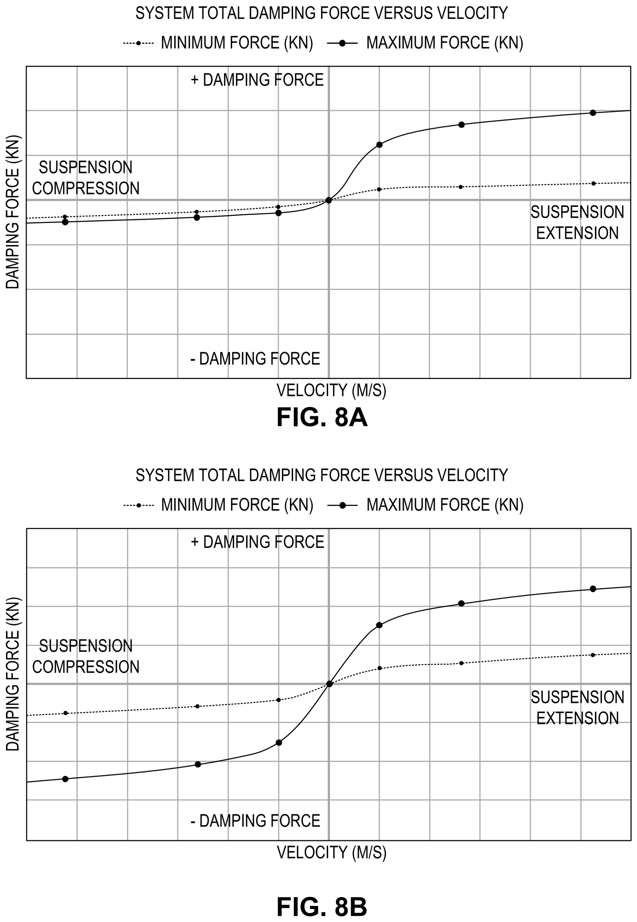

Traditional suspension damping systems include damping components that produce significant suspension extension forces and minimal suspension compression forces. Thus, these systems subject the suspension to a single acting spring rate or force curve. FIG. 8A is a plot of damping force versus velocity for such a damping system.

In contrast, example suspension damping systems disclosed herein utilize damping components that achieve equal damping forces in each direction (suspension compression or suspension extension). FIG. 8B is a plot of damping force versus velocity for two dampers mechanically mounted in accordance with the teachings of this disclosure. Thus, the mounting of the first active damper 220A and the second active damper 220B with unequal compression/extension curves results in equal damping curves in either suspension compression or suspension extension.

As a result of this design, the total additive damping force per location (e.g., corner) of the chassis 215 is symmetric in each direction of suspension displacement. This allows the active suspension control system 205 to output relatively high damping forces in compression when needed for certain control state scenarios. For example, when the work vehicle 200 traverses over an aggressive or steep terrace in a field at a fast speed, a passive chassis suspension mechanical spring or the air-spring 235 may not provide sufficient compressive force capacity. The example active suspension control system 205 disclosed herein can be activated to provide compressive damping force to slow down suspension motion before the hard stops in the terrain are contacted in a high impact event.

The active suspension control system 205 can be included at multiple locations around the chassis 215 such as at each wheel 210. Thus, in some examples, there is a second active suspension control system 205 that includes a third damper and a fourth damper that are configured the same as and operate the same as the first active damper 220A and the second active damper 220B. In some examples, the different active suspension control system 205 are operated independently to stabilize the chassis 215 at their respective locations. In some examples, there are two active suspension control systems 205. In some examples, there are other numbers of active suspension control systems 205 such as three, four, or more.

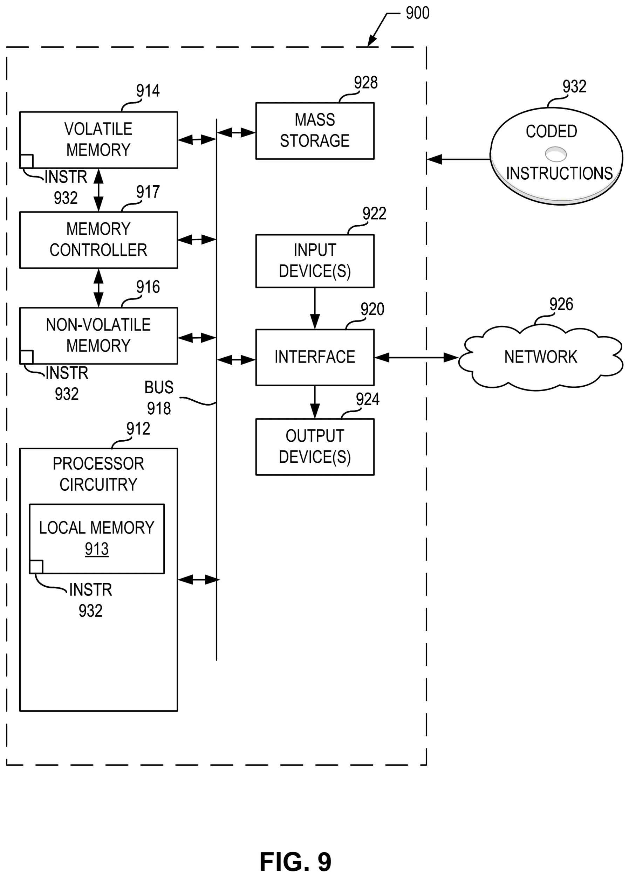

FIG. 9 is a block diagram of an example programmable circuitry platform 900 structured to execute and/or instantiate machine-readable instructions to control dampers and vehicle suspension damping systems disclosed herein. The programmable circuitry platform 900 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, or any other type of computing device. The programmable circuitry platform 900 may be included with the electronic controller 240.

The programmable circuitry platform 900 of the illustrated example includes programmable circuitry 912. The programmable circuitry 912 of the illustrated example is hardware. For example, the programmable circuitry 912 can be implemented by integrated circuits, logic circuits, microprocessors, a central processor unit (CPU), a graphics processing unit (GPU), a vision processing unit (VPU), a digital signal processor (DSP), a field programmable gate array (FPGA), a programmable logic device (PLD), a generic array logic (GAL) device, a programmable array logic (PAL) device, a complex programmable logic device (CPLD), a simple programmable logic device (SPLD), a microcontroller (MCU), a programmable system on chip (PSoC), an Application Specific Integrated Circuit (ASIC), etc. The programmable circuitry 912 may be implemented by one or more semiconductor based (e.g., silicon based) devices. Some or all of the circuitry of FIG. 9 may be instantiated at the same or different times. Some or all of the circuitry of FIG. 9 may be instantiated, for example, in one or more threads executing concurrently on hardware and/or in series on hardware. Moreover, in some examples, some or all of the circuitry of FIG. 9 may be implemented by microprocessor circuitry executing instructions and/or FPGA circuitry performing operations to implement one or more virtual machines and/or containers.

The programmable circuitry 912 of the illustrated example includes a local memory 913 (e.g., a cache, registers, etc.). The programmable circuitry 912 of the illustrated example is in communication with main memory 914, 916, which includes a volatile memory 914 and a non-volatile memory 916, by a bus 918. The volatile memory 914 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 916 may be implemented by flash memory and/or any other desired type of memory device. Access to the main memory 914, 916 of the illustrated example is controlled by a memory controller 917. In some examples, the memory controller 917 may be implemented by one or more integrated circuits, logic circuits, microcontrollers from any desired family or manufacturer, or any other type of circuitry to manage the flow of data going to and from the main memory 914, 916.

The programmable circuitry platform 900 of the illustrated example also includes interface circuitry 920. The interface circuitry 920 may be implemented by hardware in accordance with any type of interface standard, such as an Ethernet interface, a universal serial bus (USB) interface, a Bluetooth^{®} interface, a near field communication (NFC) interface, a Peripheral Component Interconnect (PCI) interface, and/or a Peripheral Component Interconnect Express (PCle) interface.

In the illustrated example, one or more input devices 922 are connected to the interface circuitry 920. The input device(s) 922 permit(s) a user (e.g., a human user, a machine user, etc.) to enter data and/or commands into the programmable circuitry 912. The input device(s) 922 can be implemented by, for example, an audio sensor, a microphone, a camera (still or video), a keyboard, a button, a mouse, a touchscreen, a trackpad, a trackball, an isopoint device, and/or a voice recognition system.

One or more output devices 924 are also connected to the interface circuitry 920 of the illustrated example. The output device(s) 924 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 920 of the illustrated example, thus, typically includes a graphics driver card, a graphics driver chip, and/or graphics processor circuitry such as a GPU.

The interface circuitry 920 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 926. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 900 of the illustrated example also includes one or more mass storage discs or devices 928 to store firmware, software, and/or data. Examples of such mass storage discs or devices 928 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine-readable instructions 932 may be stored in the mass storage device 928, in the volatile memory 914, in the non-volatile memory 916, and/or on at least one non-transitory computer readable storage medium such as a CD or DVD which may be removable.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is openended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects, and/or things, the phrase "at least one of A and B" is intended to refer to implementations including any of (1) at least one A, (2) at least one B, or (3) at least one A and at least one B. Similarly, as used herein in the context of describing structures, components, items, objects, and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible or advantageous.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real-world imperfections as will be understood by persons of ordinary skill in the art. For example, "approximately" and "about" may indicate such dimensions may be within a tolerance range of +/- 10% unless otherwise specified herein.

As used herein "substantially real time" refers to occurrence in a near instantaneous manner recognizing there may be real world delays for computing time, transmission, etc. Thus, unless otherwise specified, "substantially real time" refers to real time + 1 second.

From the foregoing, it will be appreciated that example systems, apparatus, articles of manufacture, and methods have been disclosed that control suspensions in work vehicles. Disclosed systems, apparatus, articles of manufacture, and methods improve the operation of such vehicles and implements. Examples disclosed provide symmetric compression and extension forces at locations about the chassis. The examples enable the application of greater compression forces when needed during operation of the work vehicle than can be accomplished in traditional machines that only apply asymmetric compression and extension forces. Examples disclosed herein increase vehicle and implement stability and operation and operator comfort.

Example suspension controls disclosed herein are not limited to the illustrated suspension systems. The disclosed examples may also be employed in other suspension systems such as single spindle suspensions, leading/trailing arm suspensions, lead spring suspensions, etc.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

Embodiments of the invention can be described with reference to the following numbered clauses, with preferred features laid out in dependent clauses:
1. A vehicle comprising:
   a chassis;
   a first damper coupled to the chassis;
   a second damper coupled to the chassis; and
   a wheel, the first damper and the second damper coupled to the wheel,
   wherein the first damper is configured to provide suspension compression when the second damper provides suspension extension.
2. The vehicle of clause 1, wherein the suspension compression and the suspension extension are symmetric.
3. The vehicle of clause 1 or clause 2, wherein the first damper and the second damper include hydraulic dampers.
4. The vehicle of any preceding clause, further including:
   an axle knee, a first end of the first damper coupled to the axle knee;
   a wheel motor casting coupled to a rim of the wheel, a second end the first damper coupled to the wheel motor casting, a first end of the second damper coupled to the wheel motor casting; and
   a support plate, a second end of the second damper coupled to the support plate.
5. The vehicle of clause 4, wherein the wheel motor casting has a first end and a second end separated by a length, the length parallel to a diameter of the wheel, the first damper coupled to the first end of the wheel motor casting and the second damper coupled to the second end of the wheel motor casting.
6. The vehicle of clause 5, wherein the wheel includes a tire, and a width of the tire, wheel motor casting, first damper, and second damper is less than about thirty inches.
7. The vehicle of any one of clauses 4 to 6, further including a displacement sensor to identify a distance between the axle knee and the wheel motor casting.
8. The vehicle of any preceding clause, wherein the wheel is a first wheel, the vehicle further including:
   a third damper coupled to chassis;
   a fourth damper coupled to the chassis; and
   a second wheel, the third damper and the fourth damper coupled to the second wheel,
   wherein the third damper is configured to provide suspension compression when the fourth damper provides suspension extension.
9. The vehicle of clause 8, wherein the first damper and the second damper are operable independently from the third damper and the fourth damper.
10. A suspension control system for a vehicle, the suspension assembly comprising:
   a first damping system operatively coupled to a first location of a chassis of the vehicle between a sprung mass and an unsprung mass, the first damping system having a first damping force in suspension compression and a second damping force in suspension extension, the first damping force and the second damping force are equal in magnitude; and
   a second damping system operatively coupled to a second location of the chassis of the vehicle between the sprung mass and then unsprung mass, the second damping system having a third damping force in suspension compression and a fourth damping force in suspension extension, the third damping force and the fourth damping force are equal in magnitude.
11. The suspension control system of clause 10, wherein the first damping system includes:
   a first damper; and
   a second damper, the first damper configured to provide suspension compression when the second damper provides suspension extension.
12. The suspension control system of clause 11, wherein the second damping system includes
   a third damper; and
   a fourth damper, the third damper configured to provide suspension compression when the fourth damper provides suspension extension.
13. The suspension control system of any one of clauses 10 to 12, wherein the first damping system and the second damping system are to operate independently.
14. The suspension control system of any one of clauses 10 to 13, wherein the first damping system and the second damping system include a plurality of hydraulic dampers.
15. A method to stabilize a vehicle chassis, the method comprising:
   activating a first damper coupled between a wheel and a location of a vehicle chassis; and
   activating a second damper coupled between the wheel and the location of the vehicle chassis, the first damper configured to provide suspension compression when the second damper provides suspension extension.
16. The method of clause 15, wherein the suspension compression and the suspension extension are symmetric.
17. The method of clause 15 or clause 16, further including:
   sensing a displacement of the wheel relative to the chassis; and
   activating one of the first damper or the second damper based on the displacement.
18. The method of any one of clauses 15 to 17, wherein the wheel is a first wheel, and the location is a first location, the method further including:
   activating a third damper coupled between a second wheel and a second location of the vehicle chassis; and
   activating a fourth damper coupled between the second wheel and the second location of the vehicle chassis, the third damper configured to provide suspension compression when the fourth damper provides suspension extension.
19. The method of clause 18, further including:
   activating the first damper and the second damper in unison; and
   activating the third damper and the fourth damper in unison.
20. The method of clause 19, wherein the activating of the third damper and the fourth damper is independent of the activating of the first damper and the second damper.

## Claims

1. A vehicle (100, 200) comprising:
a chassis (215);
a first damper (220A) coupled to the chassis;
a second damper (220B) coupled to the chassis; and
a wheel (210), the first damper and the second damper coupled to the wheel,
wherein the first damper is configured to provide suspension compression when the second damper provides suspension extension.

2. The vehicle of claim 1, wherein the suspension compression and the suspension extension are symmetric.

3. The vehicle of any of claims 1 or 2, wherein the first damper and the second damper include hydraulic dampers.

4. The vehicle of any of claims 1 to 3, further including:
an axle knee (225), a first end of the first damper coupled to the axle knee;
a wheel motor casting (230) coupled to a rim (305) of the wheel, a second end the first damper coupled to the wheel motor casting, a first end of the second damper coupled to the wheel motor casting; and
a support plate (320), a second end of the second damper coupled to the support plate.

5. The vehicle of claim 4, wherein the wheel motor casting has a first end (325) and a second end (330) separated by a length, the length parallel to a diameter of the wheel, the first damper coupled to the first end of the wheel motor casting and the second damper coupled to the second end of the wheel motor casting.

6. The vehicle of claim 5, wherein the wheel includes a tire (300), and a width of the tire, wheel motor casting, first damper, and second damper is less than about thirty inches.

7. The vehicle of any of claims 4 to 6, further including a displacement sensor (250) to identify a distance between the axle knee and the wheel motor casting.

8. The vehicle of any of claims 1 to 7, wherein the wheel is a first wheel, the vehicle further including:
a third damper (220A) coupled to chassis;
a fourth damper (220B) coupled to the chassis; and
a second wheel (210), the third damper and the fourth damper coupled to the second wheel,
wherein the third damper is configured to provide suspension compression when the fourth damper provides suspension extension.

9. The vehicle of claim 8, wherein the first damper and the second damper are operable independently from the third damper and the fourth damper.

10. A method to stabilize a vehicle chassis (215), the method comprising:
activating a first damper (220A) coupled between a wheel (210) and a location of the vehicle chassis; and
activating a second damper (220B) coupled between the wheel and the location of the vehicle chassis, the first damper configured to provide suspension compression when the second damper provides suspension extension.

11. The method of claim 10, wherein the suspension compression and the suspension extension are symmetric.

12. The method of any of claims 10 or 11, further including:
sensing a displacement of the wheel relative to the chassis; and
activating one of the first damper or the second damper based on the displacement.

13. The method of any of claims 10 to 12, wherein the wheel is a first wheel, and the location is a first location, the method further including:
activating a third damper (220A) coupled between a second wheel (210) and a second location of the vehicle chassis; and
activating a fourth damper (220B) coupled between the second wheel and the second location of the vehicle chassis, the third damper configured to provide suspension compression when the fourth damper provides suspension extension.

14. The method of claim 13, further including:
activating the first damper and the second damper in unison; and
activating the third damper and the fourth damper in unison.

15. The method of claim 14, wherein the activating of the third damper and the fourth damper is independent of the activating of the first damper and the second damper.
